(19) Europäisches Patentamt
European Patent Office
Office européen des brevets

(11) **EP 4 276 937 A1**

(12) **EUROPEAN PATENT APPLICATION**

(43) Date of publication:
**15.11.2023  Bulletin 2023/46**

(21) Application number: **23172468.3**

(22) Date of filing: **10.05.2023**

(51) International Patent Classification (IPC):
*H01M 4/133* (2010.01)     *H01M 4/134* (2010.01)
*H01M 4/1393* (2010.01)    *H01M 4/1395* (2010.01)
*H01M 4/36* (2006.01)      *H01M 4/38* (2006.01)
*H01M 4/587* (2010.01)     *C01B 25/00* (2006.01)
*C01B 32/15* (2017.01)     *C01B 32/182* (2017.01)
*C01B 32/20* (2017.01)     *C01B 33/00* (2006.01)
*H01M 4/04* (2006.01)      *H01M 4/02* (2006.01)

(52) Cooperative Patent Classification (CPC):
**H01M 4/134; C01B 32/15; C01B 32/182;
C01B 32/20; C01B 33/00; H01M 4/0471;
H01M 4/133; H01M 4/1393; H01M 4/1395;
H01M 4/366; H01M 4/386; H01M 4/587;**
H01M 2004/021; H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.05.2022  CN 202210523830**

(71) Applicants:
• **Hon Hai Precision Industry Co., Ltd.**
**New Taipei City (TW)**
• **SolidEdge Solution Inc.**
**Hsinchu 300 (TW)**

(72) Inventors:
• **CHEN, MAO-SUNG**
**300 Hsinchu (TW)**
• **CHEN, WEI-LUN**
**300 Hsinchu (TW)**
• **LAI, HONG-ZHENG**
**300 Hsinchu (TW)**
• **CHANG, TSENG-LUNG**
**300 Hsinchu (TW)**

(74) Representative: **Zaboliene, Reda**
**Metida**
**Business center Vertas**
**Gyneju str. 16**
**01109 Vilnius (LT)**

(54) **ELEMENT-DOPED SILICON-CARBON COMPOSITE NEGATIVE ELECTRODE MATERIAL AND PREPARATION METHOD THEREOF**

(57)    An element-doped silicon-carbon composite negative electrode material is provided. The negative electrode material comprises a plurality of element-doped silicon-carbon composite negative electrode material particles, and each them comprises an element-doped silicon nanoparticle, a first carbon coating layer and a second carbon coating layer. The element-doped silicon nanoparticle is a core, and the first carbon coating layer is coated on the element-doped silicon nanoparticle, the second carbon coating layer covers the first carbon coating layer. The dopant element comprises at least one of a group IIIA element, a group VA element and a transition metal element. A method of preparing the element-doped silicon-carbon composite negative electrode material is further provided.

**Description**

CROSS-REFERENCE TO RELATED APPLICATIONS

This application claims all benefits from China Patent Application No. 202210523830.7, filed on May 13, 2022, in the China Intellectual Property Office, the contents of which are hereby incorporated by reference.

FIELD

The present disclosure relates to an element-doped silicon-carbon composite negative electrode material and preparation method thereof.

BACKGROUND

In recent years, silicon has been regarded as a promising negative material replacing graphite due to its advantages such as low cost, environmental friendly, high specific capacity (4200 mAh g$^{-1}$), voltage platform slightly higher than graphite, and no lithium metal deposition on the surface during charging. However, the volume of the silicon material will expand violently (~300%) when intercalating lithium, and will shrink when removing lithium. This repeated dramatic volume change (called volume effect) will cause cracking and pulverization of the silicon material and cause structural collapse. And, the structural collapse causes the active material to be peeled off from the current collector and lose electrical contact, which reduces the cycle stability of the battery. Furthermore, due to this volume effect, it is difficult for silicon to form a stable solid-state electrolyte interface (SEI) in the electrolyte. With the destruction of the structure, new silicon is exposed on the surface and continuously forms an SEI film, which will intensify the corrosion of silicon and cause the capacity of the battery to decay.

In order to solve the above problems and improve the electrochemical performance of the silicon material, in the prior art, the silicon material is usually oxidized to form a silicon oxide shell. However, the conductivity of silicon is 103 $\Omega \cdot$m, and the conductivity of the oxidized material (SiO$_x$) is lower than that, which seriously affects the charge transfer. Furthermore, using SiO$_x$ to suppress the expansion will increase the consumption of lithium ions due to electrochemical side reactions, which will affect the long-term cycle effect.

BRIEF DESCRIPTION OF THE DRAWINGS

Implementations of the present technology will now be described, by way of example only, with reference to the attached figures, wherein:

FIG. 1 is a schematic structural view of an element-doped silicon-carbon composite negative electrode material particle provided by an embodiment of the present invention.
FIG. 2 is a schematic flowchart of a method for preparing element-doped silicon-carbon composite negative electrode material provided by an embodiment of the present invention.
FIG. 3 is a scanning electron micrograph of surfaces of the element-doped silicon-carbon composite negative electrode material particles provided by the embodiment of the present invention.
FIG. 4 is an XRD (X-ray diffraction) comparison graph of the element-doped silicon-carbon composite negative electrode material provided by the embodiment of the present invention and a negative electrode material provided by a comparative example.
FIG. 5 is a graph showing the lithium de-lithium capacity, lithium-insertion capacity and efficiency of the element-doped silicon-carbon composite negative electrode material provided by the embodiment of the present invention after a battery is formed.

DETAILED DESCRIPTION

The disclosure is illustrated by way of example and not by way of limitation in the figures of the accompanying drawings in which like references indicate similar elements. It should be noted that references to "another," "an," or "one" embodiment in this disclosure are not necessarily to the same embodiment, and such references mean "at least one."
It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures, and components have not been described in detail so as not to obscure the related relevant feature being described. Also, the description is not to be considered as limiting the scope of the embodiments described herein. The drawings are not necessarily to scale, and the proportions of certain parts have been exaggerated to better illustrate details and features of the present disclosure.

Several definitions that apply throughout this disclosure will now be presented.

The term "substantially" is defined to be essentially conforming to the particular dimension, shape, or other feature which is described, such that the component need not be exactly or strictly conforming to such a feature. The term "comprise," when utilized, means "include, but not necessarily limited to"; it specifically indicates open-ended inclusion or membership in the so-described combination, group, series, and the like.

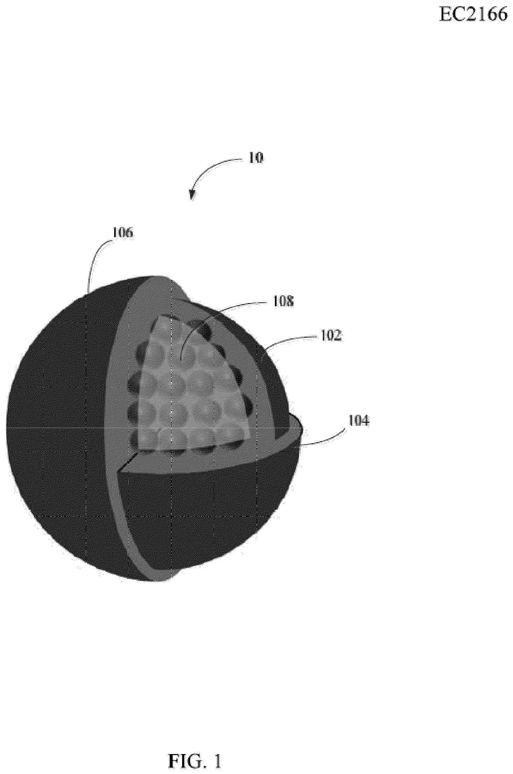

An embodiment of the present invention provides an element-doped silicon-carbon composite negative electrode material. The element-doped silicon-carbon composite negative electrode material includes a plurality of element-doped silicon-carbon composite negative electrode material particles. Please refer to FIG. 1, the element-doped silicon-carbon composite anode material particle 10 includes an element-doped silicon nanoparticle 102, a first carbon coating layer 104 and a second carbon coating layer 106. The element-doped silicon nanoparticle 102 is a core, the first carbon coating layer 104 coats on a surface of the element-doped silicon nanoparticle 102, and the second carbon coating layer 106 covers the first carbon coating layer 104. The element-doped silicon nanoparticle 102 includes a silicon matrix (not shown) and dopant elements 108 located inside the silicon matrix. The dopant elements can include at least one of Group IIIA elements, Group VA elements and transition metal elements.

The element-doped silicon-carbon composite negative electrode material particle 10 has a diameter ranged from 10 microns to 20 microns. The shape of the element-doped silicon-carbon composite negative electrode material particle 10 can be spherical or quasi-spherical. The quasi-spherical refers to a shape close to a sphere, but not strictly a sphere, which belongs to an irregular shape. A particle size of the silicon nanoparticle 102 can be ranged from 10 nm to 100 nm.

The dopant elements 108 can be a group IIIA element, such as boron (B), aluminum (Al), gallium (Ga), indium (In), thallium (Tl), germanium (Ge), tin (Sn) or lead (Pb). The dopant elements 108 can also be VA group elements, such as nitrogen (N), phosphorus (P), arsenic (As), tellurium (Sb) or bismuth (Bi). The dopant elements 108 can also be transition metal elements, such as scandium (Sc), titanium (Ti), vanadium (V), chromium (Cr), manganese (Mn), iron (Fe), cobalt (Co), nickel (Ni), copper (Cu), zinc (Zn), yttrium (Y), zirconium (Zr), niobium (Nb), molybdenum (Mo), technetium (Tc), ruthenium (Ru), rhodium (Rh), palladium (Pd), silver (Ag) or cadmium (Cd), etc. The element doping can reserve space in the silicon lattice. When the element-doped silicon-carbon composite negative electrode material is used as the negative electrode, during the cycle, the dopant elements 108 can provide a buffer space required for the volume expansion of the silicon material, Therefore, the cycle performance of the element-doped silicon-carbon composite negative electrode material is greatly improved. Each element-doped silicon-carbon composite negative electrode material particle 10 can only include one kind of dopant element 108, or can include two or more kinds of dopant elements 108.

The element-doped silicon-carbon composite negative electrode material does not contain silicon oxide.

A mass percentage of silicon oxide in the element-doped silicon-carbon composite negative electrode material is less than or equal to 0.1%.

The element-doped silicon-carbon composite negative electrode material does not contain oxides at all.

In a certain embodiment, the element-doped silicon-carbon composite anode material particle 10 insists of the element-doped silicon nanoparticle 102, the first carbon coating layer 104 and the second carbon coating layer 106.

Since the element-doped silicon-carbon composite negative electrode material does not contain oxides, when the element-doped silicon-carbon composite negative electrode material is used as in a negative electrode, there is no irreversible oxide material to increase the consumption of lithium ions during a charge-discharge cycle, thereby increasing the efficiency of the battery.

A material of the first carbon coating layer 104 includes at least one of pitch, graphite and graphene. The first carbon coating layer 104 covers the element-doped silicon nanoparticle 102, which can suppress volume expansion and reduce volume effect. A material of the second carbon coating layer 106 includes at least one of carbon black, carbon nanotubes and carbon nanofibers. The second carbon coating layer 106 covers the first carbon coating layer 104. Compared with the first carbon coating layer 104, the second carbon coating layer 106 has a higher electrical conductivity, and the second carbon coating layer 106 can provide charge transfer to increase the capacity of the battery.

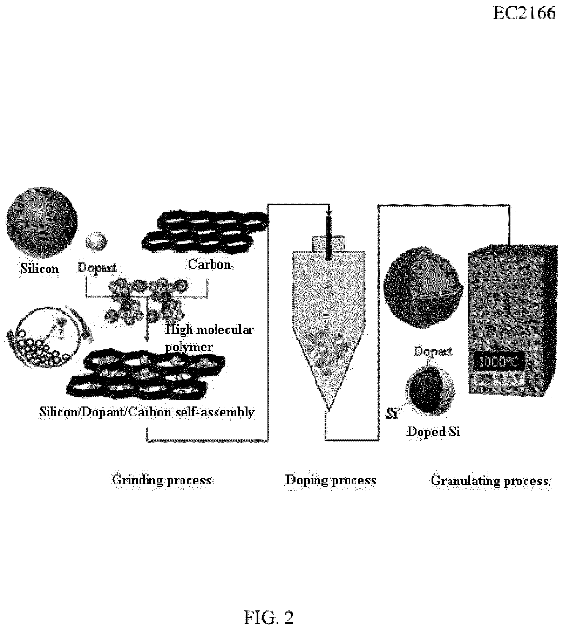

Please refer to Fig. 2, an embodiment of the present invention further provides a method for preparing an element-doped silicon-carbon composite negative electrode material, which includes the following steps:

S1: in a protected environment, silicon material is nano-sized to obtain nano-silicon material, the protected environment is obtained by introducing an inert gas or adding a solvent;

S2: in the protective environment, adding an appropriate amount of dopant element raw materials into the nano-silicon material, then adding a high molecular polymer, and fully stirring and mixing the nano-silicon material, the dopant element raw materials and the high molecular polymer;

S3: accompanied by the high molecular polymer, adding a first carbon source for self-assembly, and then adding a second carbon source for self-assembly to obtain layered nano-silicon material;

S4: under the protective environment, granulating the layered nano-silicon material to obtain a spherical precursor material;

S5: sintering the spherical precursor material in a reducing atmosphere environment or in a vacuum environment at a temperature ranged from 800 °C to 1100 °C. to obtain the silicon-carbon composite negative electrode material.

Hereinafter, each step of the method for preparing the element-doped silicon-carbon composite negative electrode material provided by the embodiment of the present invention will be described in detail.

In step S1, in some embodiments, the silicon material can be semiconductor-grade silicon material, and the particle size of the silicon material is greater than or equal to 10 microns. The nano-sized process includes but not limited to mechanical processing, mechanical ball milling, etc. The mechanical ball milling can be dry milling or wet milling. The nano-sized process can also be prepared by a chemical or physical vapor deposition method.

In step S1, in some embodiments, the inert gas includes at least one of argon (Ar), nitrogen ($N_2$) and helium (He). The inert gas can provide an oxygen-free environment to prevent nano-silicon from being oxidized, so that the element-doped silicon-carbon composite negative electrode material prepared by this method does not contain silicon oxide, which is conducive to improve the electrochemical properties and to reduce volume effects of the element-doped silicon-carbon composite negative electrode material.

In step S1, in some embodiments, the solvent can be diethylene glycol (DEG), polyethylene glycol (PEG), propylene glycol (PG), dimethyl sulfoxide (DMSO) or a combination thereof. The solvent can prevent nano-silicon from being oxidized, so that the prepared element-doped silicon-carbon composite negative electrode material does not contain silicon oxide, which is conducive to improve the electrochemical properties and to reduce volume effects of the element-doped silicon-carbon composite negative electrode material.

In step S1, in some embodiments, the particle size of nano-silicon is ranged from 10nm to 50nm. Nano-silicon is conducive to subsequent self-assembly coating, and the preparation of silicon-carbon composite negative electrode materials with suitable particle sizes is suitable for the current slurry preparing process of secondary batteries.

In step S2, a raw material for the dopant element can be solid, liquid or gaseous, which will be determined by the dopant element. The dopant element can be a simple substance or a compound. The dopant elements 108 can be a group IIIA element, such as boron (B), aluminum (Al), gallium (Ga), indium (In), thallium (Tl), germanium (Ge), tin (Sn) or lead (Pb). The dopant elements 108 can also be VA group elements, such as nitrogen (N), phosphorus (P), arsenic (As), tellurium (Sb) or bismuth (Bi). The dopant elements 108 can also be transition metal elements, such as scandium (Sc), titanium (Ti), vanadium (V), chromium (Cr), manganese (Mn), iron (Fe), cobalt (Co), nickel (Ni), copper (Cu), zinc (Zn), yttrium (Y), zirconium (Zr), niobium (Nb), molybdenum (Mo), technetium (Tc), ruthenium (Ru), rhodium (Rh), palladium (Pd), silver (Ag) or cadmium (Cd), etc. For example, when the dopant element is a metal, it can be a solid element, and the raw material of the dopant element can be metal particles.

In step S2, the method of sufficiently stirring and mixing the nano-silicon, the raw material of the dopant element and the polymer can be mechanical grinding method or mechanical ball milling method. During the stirring and mixing process, since the Mohs hardness of the dopant material is smaller than that of the silicon material, the particle refinement speed of the dopant material will be faster than that of the silicon material during the processing and grinding process.

In step S2, in some embodiments, the high molecular polymer is an amphoteric high molecule having both hydrophobic groups and hydrophilic groups. Further, the high molecular polymer can be N-allyl-(2-ethylxanthyl) propionamide (NAPA), dimethylformamide (DMF) or a combination thereof. In some embodiments, the high molecular polymer is a medium containing amino groups and hydroxyl groups.

In step S3, in some embodiments, the first carbon source includes at least one of pitch, graphite, and graphene. The first carbon source is layered, and the carbon buffer layer formed by the first carbon source covers and wraps the nano-silicon, which can inhibit volume expansion and reduce volume effect. Moreover, during the self-assembly process, particles escaping will introduce an exothermic reaction, and the first carbon source can perform thermal diffusion to avoid agglomeration and prevent nano-silicon from being oxidized due to the exothermic reaction.

In step S3, in some embodiments, the second carbon source includes at least one of carbon black, carbon nanotubes and carbon nanofibers. The carbon conductive layer formed by the second carbon source can cover the carbon buffer layer, and the second carbon source has higher electrical conductivity than the first carbon source, and the carbon conductive layer can provide charge transfer to increase the capacitance. Moreover, during the self-assembly process, particles escaping will trigger an exothermic reaction, and the second carbon source can perform thermal diffusion to avoid agglomeration and prevent nano-silicon from being oxidized due to the exothermic reaction.

Both steps S2 and S3 are carried out accompanied by the high molecular polymer. Using the high molecular polymer, the dopant element particles can be coated on the silicon surface first. Then, using the hydrophilic and hydrophobic properties of the high molecular polymer, the high molecular polymer chain at a water-transporting end can be combined with the carbon substrate added later, so that silicon doping occurs simultaneously during the nanonization process of the material, and, the high molecular polymer and the carbon complete the ordered stack self-assembly (self-assembly). The exothermic reaction caused by the particles escaping during grinding can also be thermally diffused through the carbon substrate in the solvent to avoid particle agglomeration and oxidation caused by thermal reaction.

Further, the homogenized self-assembly process can be, but not limited to, machining, electrical discharge machining, or mechanical ball milling. Wherein, mechanical ball milling can be dry milling or wet milling.

In step S4, the granulating process is a granulation method commonly used in the art, and is not limited in this application. Furthermore, the particle size of the spherical precursor obtained after the granulating process is ranged from 5 $\mu$m to 10 $\mu$m, which is suitable for the size of a current secondary battery pulping process, and which can also avoid agglomeration during the sintering process.

In step S5, in some embodiments, the reducing atmosphere includes a mixture of nitrogen and hydrogen. Sintering in a reducing atmosphere can remove excessive functional groups on the surface of the particles, increase the compactness and integrity of the carbon coating layers, and the reducing atmosphere can also prevent silicon from being oxidized (no oxide).

In the method for preparing an element-doped silicon-carbon composite negative electrode material provided by the present invention, after self-assembly multi-layering are completed, the material can be compacted by granulation technology. In the lithium ion activation process, dead lithium phenomenon due to excessive pores can be reduced. The method can avoid heat storage due to impedance rise during charging, and the heat storage causes thermal runaway. The method includes two-stage sintering process, and in the two-stage sintering process, granulation is completed at the same time, and the obtained material particles are solid spheres rather than hollow spheres, so as to avoid affecting the slurring of battery electrodes. Under the environment of protective atmosphere, oxides can be avoided in the element-doped silicon-carbon composite negative electrode material, and the compactness can be increased.

The advantages of the element-doped silicon-carbon composite negative electrode material and its preparation method provided by the present invention will be illustrated below through the following example and test results.

Example 1

Select semiconductor-grade silicon material (>10 $\mu$m) and put it into a grinding machine with a rotation speed of 2400~3000 rpm for mechanical processing. At the same time, add diethylene glycol and 5 wt% polymer N-allyl-(2-ethyl yellow Orthoacidyl) propionamide (NAPA), and then the silicon material is ground to 50~100 nm. After the silicon material is ground to nanometer size, dopant element source material is added for doping. In this embodiment, the dopant element is boron.

Add 10 wt% flake natural graphite, and then add carbon black, through the self-assembly process, the nano-silicon can be composited on the surface of the carbon substrate to obtain the composite precursor.

Put the composite precursor into a sintering furnace containing nitrogen-hydrogen (or argon-hydrogen) mixed gas at a gas flow rate of 2 L/min, heat treatment at 950 °C for 8 hours. After heat treatment, boron-doped silicon-carbon composite negative electrode material is obtained.

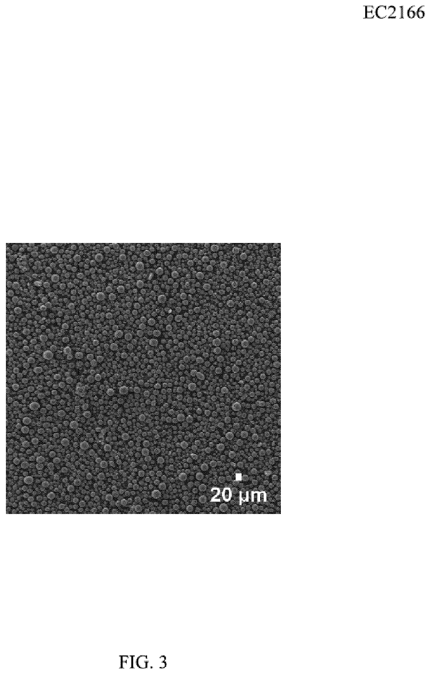

Please refer to FIG. 3, the XRD proves that, compared with the silicon-carbon composite material before doping, a peak position of the doped material shifts to a low angle by about 0.1°, which shows that element doping affects the lattice constant, as such, the XRD proves that boron is successfully doped into the silicon-carbon composite material to obtain a boron-doped silicon-carbon composite electrode material.

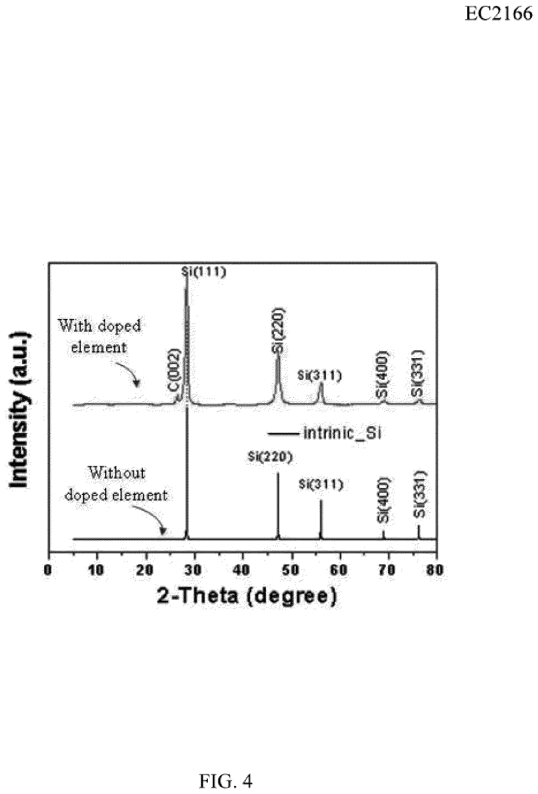

Please refer to FIG. 4, particle surfaces of the element-doped silicon-carbon composite anode material obtained after sintering are smooth, the coating is compact, and specific surface areas can be effectively controlled at the same time.

Further, according to the method provided in Example 1, phosphorus-doped silicon-carbon composite negative electrode materials and copper-doped silicon-carbon composite negative electrode materials were respectively obtained. The boron-doped silicon-carbon composite anode material is referred to as sample 1, the phosphorus-doped silicon-carbon composite anode material is referred to as sample 2, and the copper-doped silicon-carbon composite anode material is referred to as sample 3. Three samples were dissolved in water with a conductive agent (conductive carbon black Super P) and a binder (styrene-butadiene rubber SBR) with a mass ratio of 88:1:11 to obtain a mixture, and then a slurry with a solid content of 50% was prepared. The slurry was coated on a copper foil current collector and dried in vacuum to obtain a negative electrode sheet. Then the conventional production process was used to assemble a ternary positive pole piece, an electrolyte solution is a lithium salt concentration of 1 mol/L (composed of LiPF6/EC+DMC+EMC), and a Celgard2400 separator for soft-pack battery stacking and 5Ah assembly. The battery assembled from sample 1 was referred as battery 1, the battery assembled from sample 2 was referred as battery 2, and the battery assembled from sample 3 was referred as battery 3. In addition, a comparative battery 4 is provided, and the negative electrode material used in the comparative battery 4 is an undoped silicon-carbon composite material. Battery 1, battery 2, battery 3 and battery 4 were subjected to the following performance tests respectively.

The negative electrode lithium ion de-lithiation capacity test (De-Lithiation) was carried out on the above batteries: the current density was 0.1C, the voltage is dropped to 2.0V, and then the negative electrode gram capacity was converted according to the following formula to obtain the de-lithiation capacity.

$$Q(mAh \cdot g^{-1}) = \frac{\text{Rated Capacity}\,(\,mAh\,)}{\text{coating weight per unit area}\,(\,g/cm^2\,) \ \cdot \ \text{total area of current collector}\,(\,cm^2\,)}$$

Performance test result please refer to table 1.

Table 1

| Number | Doped element | Addition percentage | Faraday first effect | De-lithiation capacity | Retention rate (@100 cycles) |
|---|---|---|---|---|---|
| 1 | B | 7% | 90.1 | 2450 | 92.8% |
| 2 | P | 5% | 90.2 | 2435 | 92.5% |
| 3 | Cu | 5% | 89.7 | 2410 | 93.3% |
| 4 | - | 0% | 84.5 | 2350 | 63.5% |

It can be seen from Table 1 that the element-doped silicon-carbon composite negative electrode material provided by the embodiment of the present invention can improve the cycle performance of the battery, and the capacity retention rate after 100 cycles is over 90%. This shows that the element-doped silicon-carbon composite anode material prepared in this application can suppress volume expansion and improve conductivity and capacitance.

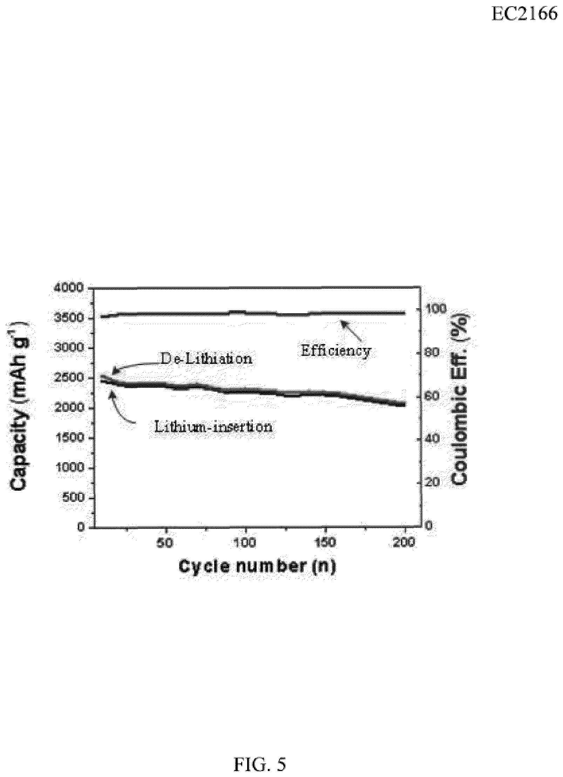

Further, the battery 1 prepared from the boron-doped silicon-carbon composite negative electrode material provided in the embodiment of the present invention was tested for de-lithiation capacity and lithium intercalation capacity at the same time, and the results is shown in FIG. 5, wherein, efficiency=de-lithiation capacity/lithium intercalation capacity × 100%. It can be seen from FIG. 5 that the battery 1 prepared by the boron-doped silicon-carbon composite negative electrode material provided by the embodiment of the present invention has almost the same de-lithiation capacity and lithium intercalation capacity, so the battery has a higher efficiency, almost reaching 100 %.

The element-doped silicon-carbon composite negative electrode material and its preparation method provided by the present invention have the following advantages. First, the element doping can reserve space in the silicon lattice, and provide a required buffer space for the volume expansion of the silicon material during the cycle, so that the cycle performance of the element-doped silicon-carbon composite negative electrode material is greatly improved. Second, the element-doped silicon-carbon composite negative electrode material does not contain oxides, and there are no irreversible oxides to increase the consumption of lithium ions during the charge-discharge cycle, thereby improving efficiency of batteries. Third, the element-doped silicon-carbon composite negative electrode material includes a first carbon coating layer and a second carbon coating layer, the first carbon coating layer is a buffer layer, which can inhibit expansion; the second carbon coating layer is a conductive layer that can provide charge transfer to increase the capacitance and improve the electrochemical performance of the silicon-carbon composite negative electrode material. The method for preparing the element-doped silicon-carbon composite negative electrode material provided in the present application is carried out under the atmosphere of protective gas, which can avoid the generation of oxides, and the process is simple and easy to control, and suitable for industrial production.

It is to be understood that the above-described embodiments are intended to illustrate rather than limit the present disclosure. Variations may be made to the embodiments without departing from the spirit of the present disclosure as claimed. Elements associated with any of the above embodiments are envisioned to be associated with any other embodiments. The above-described embodiments illustrate the scope of the present disclosure but do not restrict the scope of the present disclosure.

Depending on the embodiment, certain of the steps of a method described may be removed, others may be added, and the sequence of steps may be altered. The description and the claims drawn to a method may include some indication in reference to certain steps. However, the indication used is only to be viewed for identification purposes and not as a suggestion as to an order for the steps.

**Claims**

1.    An element-doped silicon-carbon composite negative electrode material, comprising:
a plurality of element-doped silicon-carbon composite negative electrode material particles, and each element-doped silicon-carbon composite negative electrode material particle comprises an element-doped silicon nanoparticle, a first carbon coating layer and a second carbon coating layer, the element-doped silicon nanoparticle is a core, and the first carbon coating layer is coated on the element-doped silicon nanoparticle, the second carbon coating layer covers the first carbon coating layer, and the dopant element is comprises at least one of a group IIIA element, a group VA element and a transition metal element.

2. The element-doped silicon-carbon composite negative electrode material of claim 1, wherein the element-doped silicon-carbon composite negative electrode material does not contain silicon oxide.

3. The element-doped silicon-carbon composite negative electrode material of claim 1, wherein a mass percentage of silicon oxide in the element-doped silicon-carbon composite negative electrode material is less than or equal to 0.1 %.

4. The element-doped silicon-carbon composite negative electrode material of claim 1, wherein the element-doped silicon nanoparticle comprises a silicon matrix and a dopant element located in the silicon matrix.

5. The element-doped silicon-carbon composite negative electrode material of claim 4, wherein the dopant element is boron (B), aluminum (Al), gallium (Ga), Indium (In), Thallium (Tl), Germanium (Ge), Tin (Sn), Lead (Pb), Nitrogen (N), Phosphorus (P), Arsenic (As), Tellurium (Sb), Bismuth (Bi), Scandium (Sc), Titanium (Ti), Vanadium (V), Chromium (Cr), Manganese (Mn), Iron (Fe), Cobalt (Co), Nickel (Ni), Copper (Cu), Zinc (Zn), Yttrium (Y), Zirconium (Zr), Niobium (Nb), Molybdenum (Mo), Technetium (Tc), Ruthenium (Ru), Rhodium (Rh), Palladium (Pd), Silver (Ag), Cadmium (Cd) or combinations thereof.

6. The element-doped silicon-carbon composite negative electrode material of claim 1, wherein a material of the first carbon coating layer comprises at least one of pitch, graphite and graphene.

7. The element-doped silicon-carbon composite negative electrode material of claim 1, a material of the second carbon coating layer comprises at least one of carbon black, carbon nanotubes and carbon nanofibers.

8. The element-doped silicon-carbon composite negative electrode material of claim 1, wherein a diameter of the element-doped silicon-carbon composite negative electrode material particle is ranged from 10 microns to 20 microns.

9. The element-doped silicon-carbon composite negative electrode material of claim 1, wherein each element-doped silicon-carbon composite negative electrode material particle consists of one kind of dopant element.

10. The element-doped silicon-carbon composite negative electrode material of claim 1, wherein each element-doped silicon-carbon composite negative electrode material particle comprises two or more kinds of dopant elements.

11. The element-doped silicon-carbon composite negative electrode material of claim 1, a particle size of the silicon nanoparticle is ranged from 10 nm to 100 nm.

12. A method for preparing an element-doped silicon-carbon composite negative electrode material, comprising:

S1: a silicon material is nano-sized in a protected environment to obtain nano-silicon material, wherein the protected environment is obtained by introducing an inert gas or adding a solvent;
S2: adding an appropriate amount of dopant element raw materials into the nano-silicon material in the protective environment,, then adding a high molecular polymer, and fully stirring and mixing the nano-silicon material, the dopant element raw materials and the high molecular polymer;
S3: accompanied by the high molecular polymer, adding a first carbon source for a first self-assembly action, and then adding a second carbon source for a second self-assembly action to obtain layered nano-silicon material;
S4: granulating the layered nano-silicon material in the protective environment to obtain a spherical precursor material; and
S5: sintering the spherical precursor material in a reducing atmosphere environment or in a vacuum environment at a temperature ranged from 800 °C to 1100 °C to obtain the silicon-carbon composite negative electrode material.

13. The method of claim 12, wherein the silicon material is a semiconductor-grade silicon material, and a particle size of the silicon material is greater than or equal to 10 microns.

14. The method any one of claims 12-13, wherein the solvent is diethylene glycol (DEG), polyethylene glycol (PEG), propylene glycol (PG), dimethyl sulfoxide (DMSO) or combination thereof.

15. The method any one of claims 12-13, wherein the high molecular polymer is an amphoteric high molecule having a hydrophobic group and a hydrophilic group.

EC2166

FIG. 1

EC2166

Silicon  Dopant  Carbon

High molecular polymer

Silicon/Dopant/Carbon self-assembly

Dopant

1000°C

Si

Doped Si

Grinding process    Doping process    Granulating process

FIG. 2

EC2166

FIG. 3

EC2166

FIG. 4

EC2166

FIG. 5

Europäisches
Patentamt

European
Patent Office

Office européen
des brevets

## EUROPEAN SEARCH REPORT

**Application Number**

EP 23 17 2468

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2020 0022729 A (LG CHEMICAL LTD [KR]) 4 March 2020 (2020-03-04) * paragraphs [0024] - [0030] * * paragraphs [0036] - [0037] * * paragraph [0045] * | 1-6,8-11 | INV. H01M4/133 H01M4/134 H01M4/1393 H01M4/1395 H01M4/36 |
| X | US 2021/013491 A1 (NEWBOUND TIMOTHY D [US] ET AL) 14 January 2021 (2021-01-14) * claim 10 * * paragraph [0071] * * paragraph [0073] * * paragraph [0146] * * paragraph [0176] * * paragraph [0433] * * paragraph [0448] * * paragraph [0450] * * paragraph [0513] * | 1-11 | H01M4/38 H01M4/587 C01B25/00 C01B32/15 C01B32/182 C01B32/20 C01B33/00 H01M4/04 ADD. H01M4/02 |
| A | CN 113 506 861 A (BEIJING IAMETAL NEW ENERGY CO LTD ET AL.) 15 October 2021 (2021-10-15) * the whole document * | 12-15 | |

**TECHNICAL FIELDS SEARCHED (IPC)**

H01M

The present search report has been drawn up for all claims

| Place of search | Date of completion of the search | Examiner |
|---|---|---|
| Munich | 20 September 2023 | Lavorenti, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 ..................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 2468

This annex lists the patent family members relating to the patent documents cited in the above-mentioned European search report.
The members are as contained in the European Patent Office EDP file on
The European Patent Office is in no way liable for these particulars which are merely given for the purpose of information.

20-09-2023

| Patent document cited in search report | Publication date | Patent family member(s) | Publication date |
|---|---|---|---|
| KR 20200022729 A | 04-03-2020 | NONE | |
| US 2021013491 A1 | 14-01-2021 | CA 2939114 A1 | 27-08-2015 |
| | | CN 106463707 A | 22-02-2017 |
| | | EP 3108525 A1 | 28-12-2016 |
| | | JP 2017513787 A | 01-06-2017 |
| | | KR 20160125441 A | 31-10-2016 |
| | | US 2015243973 A1 | 27-08-2015 |
| | | US 2015263342 A1 | 17-09-2015 |
| | | US 2017338476 A1 | 23-11-2017 |
| | | US 2021013491 A1 | 14-01-2021 |
| | | WO 2015127290 A1 | 27-08-2015 |
| CN 113506861 A | 15-10-2021 | NONE | |

EPO FORM P0459

For more details about this annex : see Official Journal of the European Patent Office, No. 12/82

**REFERENCES CITED IN THE DESCRIPTION**

**Patent documents cited in the description**

- CN 202210523830